# EUROPÄISCHE PATENTSCHRIFT

(11) **EP 2 406 192 B1**
(45) Veröffentlichungstag und Bekanntmachung des Hinweises auf die Patenterteilung: **10.12.2014**
(21) Anmeldenummer: 10702112.3
(22) Anmeldetag: 01.02.2010
(51) Int. Cl.: C03B 23/03

(54) **VERFAHREN ZUR HERSTELLUNG VON ABGEWINKELTEN GLASKERAMIKBAUTEILEN**
METHOD FOR PRODUCING ANGLED GLASS CERAMIC COMPONENTS
PROCÉDÉ DE FABRICATION DE COMPOSANTS COUDÉS EN VITROCÉRAMIQUE

(30) Priorität: 10.03.2009 DE 102009012018
(43) Veröffentlichungstag der Anmeldung: 18.01.2012
(73) Patentinhaber: SCHOTT AG, 55122 Mainz (DE)
(72) Erfinder: GABEL, Falk, 65388 Schlangenbad (DE); MUEHLKE, Oliver, 65366 Geisenheim (DE)
(74) Vertreter: Fleck, Hermann-Josef
(86) Internationale Anmeldenummer: PCT/EP2010/051147
(87) Internationale Veröffentlichungsnummer: WO 2010/102858

(56) Entgegenhaltungen:
- WO-A1-93/00305
- DE-A1- 10 047 576
- DE-A1- 10 102 576
- DE-A1- 10 344 444
- DE-C1- 10 039 027
- GB-A- 2 379 659
- US-A- 4 081 263
- US-A- 6 158 247

## Beschreibung

Die Erfindung betrifft ein Verfahren zur Erzeugung eines Glaskeramikbauteils mit mindestens einer Abwinklung, wobei die Abwinklung als Übergang zwischen zwei Schenkeln gebildet wird.

Eine Glaskeramik ist ein spezieller Werkstoff, der durch die gezielte und temperaturgesteuerte Kristallisation, der so genannten Keramisierung, aus einem zuvor in einer Schmelzwanne geschmolzenem und in der Regel plattenförmig geformten Glas hergestellt wird. Charakteristische Eigenschaften einer Glaskeramik sind hohe Temperaturwechselbeständigkeit sowie eine sehr geringe thermische Ausdehnung. Glaskeramiken werden z. B. bei Herdplatten, als Kochfelder, als Ofenauskleidung, als Abdeckscheibe für Strahlungsheizkörper, als Sichtscheiben für alle Öfen, die zur Beheizung eingesetzt werden, als Sichtscheibe im allgemeinen bei Verbrennungsaggregaten bis hin zu Fahrzeugsichtscheiben, die sich üblicherweise durch eine hohe Beschussbeständigkeit auszeichnen, oder auch sogar zu Beleuchtungszwecken (Reflektoren) und Astronomie-Anwendungen verwendet.

Aus dem Stand der Technik sind abgewinkelte Sichtscheiben für Kamine oder Öfen bekannt, die hauptsächlich mittels gasbetriebener Biegeanlagen und mit sehr kleinen Biegeradien von ca. 10mm hergestellt werden. Hierbei werden die zu verformenden Glaskeramikplatten im unkeramisierten Zustand, d.h. als Glas in einem der Heißformgebung nachgelagerten Zusatz-Prozess vor der eigentlichen Keramisierung gebogen.

In der DE 100 39 027 C2 ist ein Verfahren zur Herstellung gebogener Glaskeramikplatten durch Biegen der zu keramisierenden Grünglasplatten und eine betreffende Vorrichtung angegeben. Bei diesem bekannten Verfahren werden ein Heißraum und ein Werkstückträger auf 10° C bis 50° C über der Transformationstemperatur des Ausgangsglases temperiert. Sobald das Glas die Ofentemperatur erreicht hat, wird der Biegebereich zusätzlich mittels Gasbrennern oder dgl. auf die für die Verformung notwendige Temperatur erhitzt, typischerweise für eine Dauer von weniger als 30 s. Die Verformung kann unter dem Einfluss der Schwerkraft oder alternativ mittels eines mehrteiligen Werkstückträgers vorgenommen werden, der aus mehreren Segmenten besteht, die zwecks Erzeugung der der Biegung entsprechenden Kontur gegeneinander beweglich angeordnet und über einen Abwälzmechanismus mit einem Kreisabschnitt miteinander verbunden sind.

Die DE 100 47 576 A1 zeigt ein Verfahren und eine Vorrichtung zur Formgebung von Glaskeramikteilen und/oder Glasteilen. Das Formgebungsverfahren wird unter Einsatz von IR-Strahlung durchgeführt und der Glaskeramikrohling und/oder der Glasrohling wird vor dem IR-Bestrahlen dekoriert. Die Verformung kann auf verschiedene Weise erfolgen, wie Schwerkraftabsenkung oder Absenken in eine Form mit Hilfe eines Pressstempels oder mit Hilfe des Einblasens von Luft. Das Aufheizen eines Glaskeramik- bzw. Glasrohlings mit Hilfe der IR-Strahlungsmethode dauert vorzugsweise weniger als 60 Sekunden und mit dem Verfahren werden Materialtemperaturen im Bereich von 1150° C bis 1200° C und darüber erreicht.

In der GB 2 379 659 A ist ein Verfahren zum Herstellen eines transparenten Schutzelements, wie ein Visier oder eine Windschutzscheibe für einen Helikopter, offenbart.

Beispielsweise ist aus der WO 2005/042420 A1 ist ein derartiges Biegeverfahren bekannt, bei dem die Kante einer Glasplatte auf mindestens einer Seite mit einem oszillierenden Linienbrenner bis zum Erweichungspunkt des Glases erhitzt wird. Anschließend wird der über die niedrig viskose Kante hinausstehende Glasrand entlang der Biegekante als Schenkel des Glasformteiles bis zu einem vorgegebenen Winkel abgebogen und anschließend gekühlt.

Eine andere bekannte Möglichkeit abgewinkelte Glaskeramikscheiben herzustellen ist das Schwerkraftsenken durch Eigengewicht während des Keramisierungsprozesses. Abgewinkelte Glaskeramikscheiben mit Radien größer ca. 200mm können bei dem Schwerkraftsenken durch Eigengewicht direkt im Keramisierungsofen hergestellt werden.

Aus der DE 10 102576 A1 ist ein derartiges Verfahren zur Herstellung von gebogenen Glaskeramikkörpern bekannt, bei dem ein plattenförmiger Grünglaskörper bei Raumtemperatur auf eine Keramisierungsform aufgelegt wird, die eine der geometrischen Struktur des gebogenen Glaskeramikkörpers angepasste Formfläche aufweist. Dazu weist die Keramisierungsform ein dem zu formenden Bogen entsprechend bogenförmig abgesenktes Mittelteil auf. Zur Keramisierung wird die Grünglasplatte zunächst auf die Keramisierungstemperatur erwärmt. Dabei kommt die anfänglich formstabile Grünglasplatte in einen viskosen Zustand, wodurch infolge der Schwerkraft der über dem Form-Mittelteil befindliche Grünglasplatten-Teil absinkt und sich an seiner bogenförmigen Formfläche anlegt. Ein derartiges Schwerkraftsenken durch Eigengewicht ist aufgrund der niedrigen material- und prozesstypischen Sinkgeschwindigkeit relativ zeitaufwendig, so dass kein besonders hoher Durchsatz erzielt werden kann.

Die durch dieses Verfahren herstellbaren Biegeradien sind abhängig von der Glasdicke, dem Öffnungswinkel und der Viskositäts-Zeitkurve des Glaskeramikmaterials. Hinzu kommt, dass eine zunehmende Dicke aufgrund des Biegemomentes das Einsinken des Grünglases in die Form noch ungünstig beeinflusst, d.h. dieses Verfahrens des Schwerkraftsenkens ist mit zunehmender Glasdicke immer schwieriger umsetzbar.

Biegeradien kleiner 200mm sind mit diesem Verfahren nicht herstellbar, da hierfür die im Keramisierungsprozess erreichte Verweildauer bei der für die Verformung benötigten niedrigen Viskosität des Glases nicht ausreicht.

Abgewinkelte Glaskeramikscheiben mit Biegeradien typischerweise bis zu 54mm können in einer separaten Biegeanlage mittels Gasbrennern im unkeramisierten Zustand gebogen und in einem nachgeschalteten Prozessschritt im Keramisierungsofen keramisiert werden. Das Biegen von Radien größer 54mm mittels einer gasbetriebenen Biegeanlage ist technisch möglich, jedoch nur mit hohem Anlagenaufwand umsetzbar.

Es ist nun Aufgabe der Erfindung, ein Verfahren zur Herstellung von abgewinkelten Glaskeramikbauteilen anzugeben, das einen vereinfachten und beschleunigten Biegeprozess ermöglicht. Zudem sollen durch das angegebene Verfahren auch Biegeradien im Bereich von ca. 30mm-200mm auf einfache und kostengünstige Weise herstellbar sein. Dabei soll auch eine ansprechende Optik erreicht werden. Darüber hinaus hat die Erfindung das Ziel, auch sogenannte vorgekeimte Glasbauteile entsprechend der Vorgaben zu verformen. Unter "vorgekeimten Glasbauteilen" werden Grünglaser verstanden, die bereits einen gewissen Kristallphasenanteil nach der Heißformgebung aufweisen. Dieser liegt etwa zwischen 1 und 10% des Gesamtphasenanteils und verkürzt damit die Verweildauer im Bereich der niedrigen Viskosität, die für die Verformung notwendig ist).

Diese Aufgabe der Erfindung wird durch ein Verfahren zur Herstellung von abgewinkelten Glaskeramikbauteilen mit den Merkmalen des Anspruches 1 gelöst. Vorteilhafte Weiterbildungen sind jeweils in den Unteransprüchen beschrieben.

Verfahrensgemäß ist es vorgesehen, dass die Abwinklung mit einem Biegeradius im Bereich zwischen 30 mm und 200mm während des Keramisierungsprozesses bei der Umwandlung der im Grünglaszustand befindlichen Glasplatte in die Glaskeramikplatte unter Einwirkung eines Umformungswerkzeuges durchgeführt wird. Demgemäß ist der Umformungsvorgang zur Erzeugung der Abwinklung in den Keramisierungsprozess eingebunden, was eine zeitliche Optimierung der Fertigung ermöglicht. Dabei wird die für die Keramisierung benötigte (und auch zum Keramisierungsprozess gehörende) Aufheizung der Glasplatte im Grünglaszustand ausgenutzt. Während dieser Aufheizphase muss die Glasplatte auf einen Temperaturzustand erhitzt werden, in weichem sie in einen Viskositätszustand gelangt, der eine Umformung zulässt. Ab Erreichen dieses Viskositätszustandes öffnet sich ein zeitlich eng begrenztes Prozessfenster für die Umformung, da dann auch die Keramisierung (oder präziser: die Volumenkristallisation des Glases) einsetzt. Nach Erreichung eines gewissen Keramisierungsgrades ist eine Umformung nicht mehr möglich. Mit dem erfindungsgemäßen Umformungswerkzeug wird nun eine Umformkraft in den Glaswerkstoff eingebracht, der innerhalb des engen Prozessfensters die Erzeugung der Abwinklung mit einem Radium zwischen 30 und 200 mm schafft.

Gemäß einer bevorzugten Ausgestaltung der Erfindung ist es vorgesehen, dass ein Biegewinkel der Abwinklung im Bereich zwischen 0° und 179°, vorzugsweise zwischen 60° und 150° erzeugt wird. Solche Biegewinkel lassen sich mit sehr guter Oberflächenqualität des gesamten Glaskeramikbauteils während des Keramisierungsprozesses erzeugen.

Um einen stabilen Umformprozess zu gewährleisten und auch für die Schenkel eine verformungsfreie Geometrie zu garantieren, kann es erfindungsgemäß vorgesehen sein, dass die an die Abwinklung anschließenden Schenkel eine Schenkellänge im Bereich zwischen 1 und 1000 mm, vorzugsweise zwischen 50 und 600 mm, aufweisen beziehungsweise dass in Richtung der Biegeachse eine Glasteilhöhe zwischen 10 und 1000mm, vorzugsweise im Bereich zwischen 200 und 800 mm, erzeugt wird. Schenkellängen im Bereich zwischen 50 und 600 mm garantieren eine äußerst geringe Querverformung. Glasteilhöhen im Bereich zwischen 200 und 800 mm garantieren eine für die Umformung ausreichende Stützlänge.

Eine zeitoptimierte Fertigung ist dadurch gekennzeichnet, dass während des Keramisierungsprozesses eine Aufheizphase durchgeführt wird, während der die Glasplatte auf eine Keramisierungstemperatur erwärmt wird, und dass die Abwinklung vor der Erreichung der Keramisierungstemperatur dann eingeleitet wird, wenn die Glasplatte eine für die Verformung ausreichende Viskosität, bspw. 10e12 (natürlich auch darunter) bis 10e7 d Pa s aufweist.

Die Umformung gelingt besonders einfach dann, wenn vorgesehen ist, dass die Glasplatte mit ihrer Außenseite auf zwei Auflageplatten aufgelegt wird, dass auf die Innenseite der Glasplatte mindestens zwei Niederhalter aufgesetzt werden, die jeweils einer Auflageplatte zugeordnet sind, und dass mittels einer Stellmechanik die beiden Auflagenplatten bei Erreichen einer für die Verformung der Glasplatte ausreichenden Viskosität gegeneinander verschwenkt werden. Die Auflageplatten reagieren damit auf die Viskositätserniedrigung der Glasplatte als Folge des Keramisierungsprozesses und den Druck der Niederhalter.

Demgemäß kann es insbesondere vorgesehen sein, dass beidseitig einer vorgegebenen Biegekante der Glasplatte zwei Auflageplatten angeordnet sind, die jeweils einen Schenkel der Glasplatte aufnehmen und um eine sich parallel zur Biegekante der Glasplatte erstreckende Schwenkachse, beispielsweise schwerkraftbedingt oder durch Einwirkung von Spannkräften, gegeneinander verschwenkbar sind. Auf der der Auflageseite der Glasplatte abgewandten Seite der Glasplatte sind beidseitig der Biegekante der Glasplatte mindestens zwei Niederhalter angeordnet. Dabei bringen die Niederhalter während des Verformens eine in Richtung auf die Glasplatte gerichtete Kraft auf diese auf.

Die Biegevorrichtung kann mit der zu verformenden Glasplatte einfach beschickt werden. Sie kann dann im beschickten Zustand komplett in einen Ofen eingebracht werden, in welchem die Glasplatte durch Erwärmen in einen viskosen Zustand übergeführt wird. Die Biegevorrichtung ermöglicht durch die Verschwenkung der Auflageplatten eine beschleunigte Verformung, bei der die Biegekante der Glasplatte gleichsam als Scharnier zwischen den beiden Schenkeln der Glasplatte dient.

Die Niederhalter können jeweils im Bereich der beiden Tangentlinien zwischen den Schenkeln der Glasplatte und dem sich bei der Verformung einstellenden Biegeradius angeordnet sein. Dabei kann der Abstand der Niederhalter zueinander im Wesentlichen der Bogenlänge des zu verformenden Bereichs unter Berücksichtigung der thermischen Ausdehnung und des Materialschrumpfens entsprechen.

Um die zu verformende Glasplatte stabil an den Auflageplatten zu halten, kann an den der Biegekante der Glasplatte abgewandten Enden der Auflageplatten jeweils ein Anschlag für die freien Enden der zu verformenden Glasplatte angeordnet sein.

Eine besonders stabile Fixierung lässt sich dadurch erreichen, dass die beiden Auflageplatten bei aufgelegter Glasplatte um einen kleinen Neigungswinkel geneigt sind. Dies hat zur Folge, dass die Anschlagleisten eine in Richtung auf die Biegekante gerichtete Druckkraft auf die freien Enden der zu verformenden Glasplatte ausüben.

Um die Schwenkbewegung der Auflageplatten beim Verformvorgang zu begrenzen, können jeweils Anschläge vorgesehen sein.

Ferner wird erreicht, daß das erhaltene Glaskeramikbauteil einen Abwinklungsbereich auf der dem Öffnungswinkel abgekehrten Außenseite zumindest entlang einer Messstrecke im Bereich von mindestens ± 35% der Plattenerstreckung in Richtung der Biegeachse gemessen von der Plattenmitte in Richtung der Biegeachse eine Oberflächenwelligkeit mit einem Ra-Wert < 10 µm aufweist.

Würde man die Langwelligkeit des Glaskeramik-Artikels unberücksichtigt lassen, dann würde der Ra-Wert von weniger als 10 µm für die gesamte Strecke der Biegenaht gelten. Auf die visuellen Beurteilung der Welligkeit im Bereich der Biegenaht hat die Langweiligkeit keinen Einfluss. Somit ist der Ra-Wert das wesentliche Qualitätsmerkmal des Produktes, welches auf das neuartige Verfahren zurückgeführt werden kann.

Das Glaskeramikbauteil besitzt somit im Bereich der Abwinklung eine Oberflächenqualität, die aufgrund von Lichtbrechungseffekten vom Betrachter glatt, und nicht wellig, aufgefasst wird. Damit ergibt sich ein optisch homogener Übergang zwischen den Schenkeln und der Abwinklung.

Bei einer Plattenerstreckung von beispielsweise 400 mm in Richtung der Biegeachse ergibt sich eine Messstrecke von 280 mm, die sich jeweils beidseitig der Plattenmitte zu gleichen Strecken (± 140 mm) erstreckt.

Die vorgenannte Oberflächenwelligkeit mit der angegebenen Wellenamplitude und/oder der Periodizität lässt sich insbesondere mit geringem Fertigungsaufwand mit dem Verfahren gemäß dem Anspruch 1 erzeugen.

Mit der Erfindung lassen sich auch komplexe Bauteile mit guter Qualität herstellen. Beispielsweise kann es vorgesehen sein, dass an einem zweiten Schenkel ein erster und ein dritter Schenkel jeweils unter Vermittlung einer Abwinklung angeschlossen ist.

Eine ideale Festigkeitsstruktur ergibt sich für das Glaskeramikbauteil dadurch, dass die Materialgefügestruktur der Schenkel und der Abwinklung im Wesentlichen identisch sind.

Mit dem erfindungemäßen Verfahren entsteht keine oder nur eine geringe Glasdickenveränderung im Verformungsbereich. Es werden sehr glatte Oberflächen auch im Biegebereich erreicht, ohne die für mit Gasbrennern hergestellte Biegung typische Welligkeit der Oberfläche durch inhomogenes Aufheizen des Biegebereichs. Eine Verformung ist dabei auch bei sehr schnell keramisierenden Glaskeramiken herstellbar.

Die Erfindung wird im Folgenden anhand von in den Zeichnungen dargestellten Ausführungsbeispielen näher erläutert.

Es zeigen:
- Fig. 1: ein Glaskeramikbauteil in Seitenansicht und im Schnitt,
- Fig. 2: ein weiteres Glaskeramikbauteil in Seitenansicht und im Schnitt,
- Fig. 3: eine schematische Darstellung eines Umformwerkzeuges mit einer daran fixierten Glasplatte,
- Fig. 4: das Umformwerkzeug gemäß Fig. 3 in einer veränderten Betriebsstellung,
- Fig. 5: eine Aufsicht auf das in Fig. 1 gezeigte Glaskeramikbauteil,
- Fig. 6: ein Diagramm das sowohl ein Oberflächenprofil eines Glaskeramikbauteils nach dem Stand der Technik als auch eines nach dem erfindungsgemäßen Verfahren erhaltenen Glaskeramikbauteils veranschaulicht,
- Fig. 7: eine der Fig. 6 entnommenen Detailansicht in vergrößerter Darstellung,
- Fig. 8 und 9: ein Diagramm mit dem Oberflächenprofil gemäß Stand der Technik bzw. gemäß der Erfindung nach Fig. 7 jeweils mit einer überlagerten Polynomkurve
- Fig. 10 ,11: jeweils eine durch Subtraktion des Oberflächenprofils und der Polynomkurve nach Fig. 8 und 9 entstandene Ergebniskurve,
- Fig. 12: eine fotorealistische Darstellung des nach dem erfindungsgemäßen Verfahren erhaltenen Glaskeramikbauteils gem. Fig. 1 und
- Fig. 13: eine fotorealistische Darstellung eines Glaskeramikbauteils gemäß dem Stand der Technik.

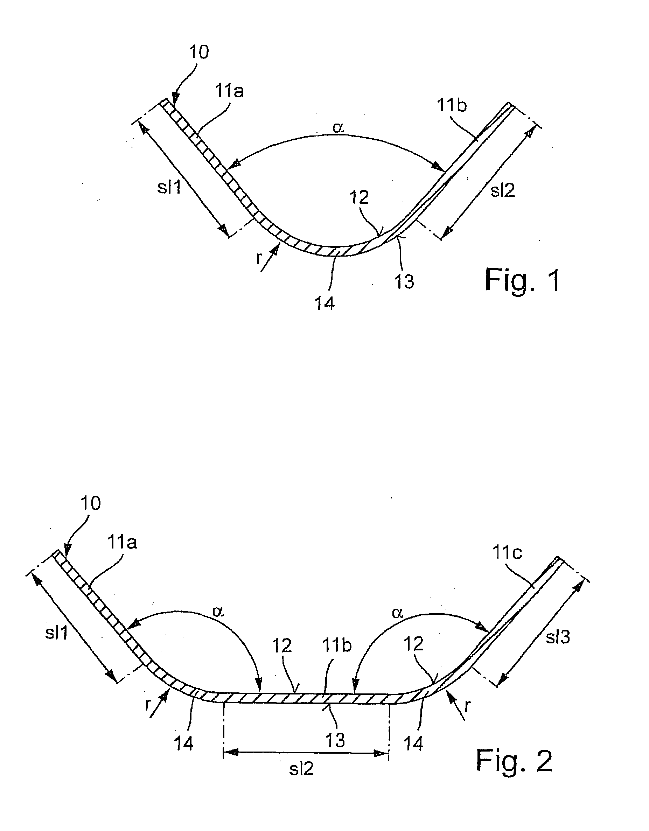

Fig. 1 zeigt ein Glaskeramikbauteil 10, das zwei Schenkel 11a, 11 b aufweist, die mittels einer Abwinklung 14 einteilig miteinander verbunden sind. Die beiden Schenkel 11a, 11b schließen auf der Innenseite des Glaskeramikbauteils 10 den Öffnungswinkel α ein. Auf der Außenseite 13 bildet das Glaskeramikbauteil 10 im Bereich der Abwinklung 14 eine konvexe Kontur, die vorliegend den konstanten Biegeradius r aufweist. Die Schenkel 11a, 11b haben eine identische Schenkellänge sL1, sL2.

Im Ausführungsbeispiel nach Fig. 2 ist ein Glaskeramikbauteil 10 gezeigt, das drei Schenkel 11 a, 11 b, 11 c mit den Schenkellängen sL1, sL2, sL3 aufweist. An den Schenkel 11 b schließen sich endseitig die Schenkel 11 a und 11c jeweils über eine Abwinklung 14 an. Zwischen den Schenkeln 11a, 11 b, 11 c ist im Bereich der Innenseite 12 je ein Öffnungswinkel α eingeschlossen, wobei die Öffnungswinkel a vorliegend identisch sind. Außenseitig ergibt sich wieder ein Biegeradius r an den Abwinklungen 14.

Die Glaskeramikbauteile 10 haben eine Bauteilhöhe in Richtung senkrecht der Bildebene gem. Fig. 1 und Fig. 2 von vorzugsweise 200 bis 600mm.

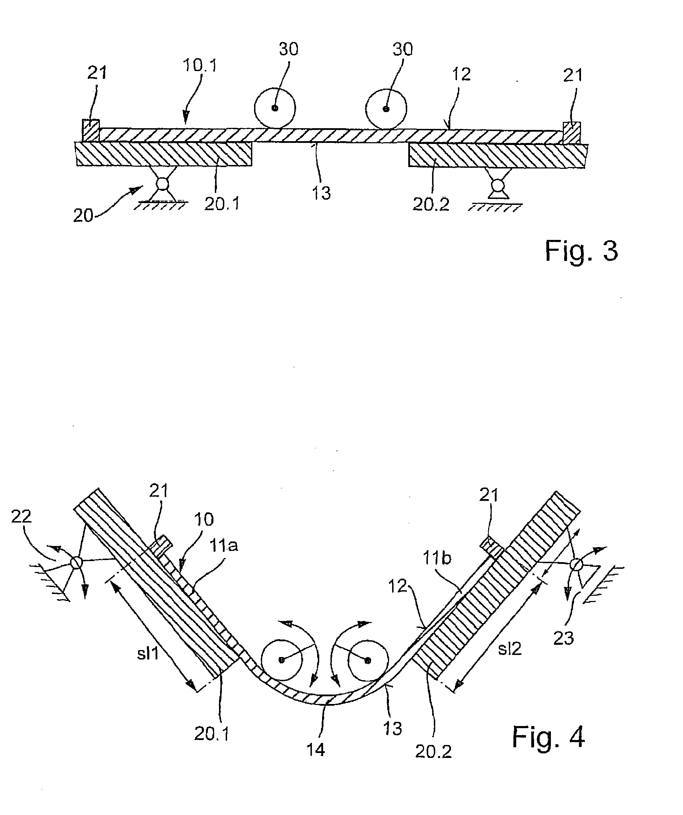

Fig. 3 zeigt schematisch ein Umformungswerkzeug zur Erzeugung des Glaskeramikbauteils 10 gem. Fig. 1. Das Umformwerkzeug besitzt zwei Auflageplatten 20.1 und 20.2.

Auf diese Auflageplatten 20.1 und 20.2 ist eine Glasplatte 10.1 im Grünglaszustand aufgelegt. Die Glasplatte 10.1 liegt dabei mit der Außenseite 13 flächig auf der Oberseite der Auflageplatten 20.1 und 20.2 auf. Die längsseitigen Enden der Glasplatte 10.1 sind unter Berücksichtigung der möglichen Längendehnung beim Erwärmungsvorgang mittels zweier Anschlägen 21 lagepositioniert. Auf der Oberseite 12 der Glasplatte 10.1 sind zwei walzenförmige Niederhalter 30 positioniert. Die Mittellängsachsen der Niederhalter 30 verlaufen in Richtung senkrecht zu der Bildebene und damit längs der Biegeachse und der Bauteilbreite.

Der Verbund gem. Fig. 3 wird in einen Keramisierungsofen verbracht und dort auf die Keramisierungstemperatur erhitzt. Während des Erwärmungsvorgangs wird die Glasplatte 10.1 in einen Temperaturzustand gebracht, der eine Verformung möglich macht. Dann setzt das Umformwerkzeug ein und die beiden Auflageplatten 20.1 und 20.2 werden um einen der Abwinklung 14 entsprechenden Winkelbereich gegeneinander gekippt.

Die linke Auflageplatte 20.1 ist dabei schwenkbar an ein Schwenklager 22 angekoppelt. Die rechte Auflageplatte 20.2 ist an ein Lager 23 angekoppelt, das eine kombinierte Schwenk- und Verschiebebewegung durchführt, wie dies durch die Doppelpfeile am Lager 23 angedeutet ist. Nach der erfolgten Umformung ergibt sich die in Fig. 1 gezeigte Geometrie. Nach Abschluss der Keramisierung wird der Verbund gem. Fig. 4 aus dem Keramisierungsofen geholt und abgekühlt. Dann kann das fertige Glaskeramikbauteil 10 abgenommen werden. Das Glaskeramikbauteil 10 zeichnet sich durch eine hervorragende Oberflächenqualität aus, wie dies nachstehend erläutert wird:

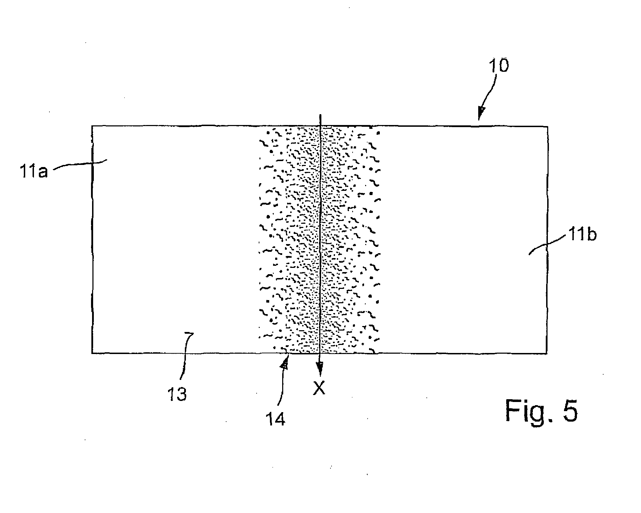

Fig. 5 zeigt eine Aufsicht auf das Glaskeramikbauteil 10 gemäß Fig. 1. Dabei ist die konvexe Seite der Abwinklung 14 dem Betrachtet zugekehrt. Die konvexe Abwinklung 14 ist schattiert gezeichnet.

Exakt im Mittenbereich des Glaskeramikbauteils 10 ist eine Achse x eingezeichnet, die in Richtung der Biegeachse verläuft. Entlang dieser Achse x wird ein Taster eines Welligkeitsprofil-Messgerätes auf der Außenseite 13 des Glaskeramikbauteils 10 entlang geführt.

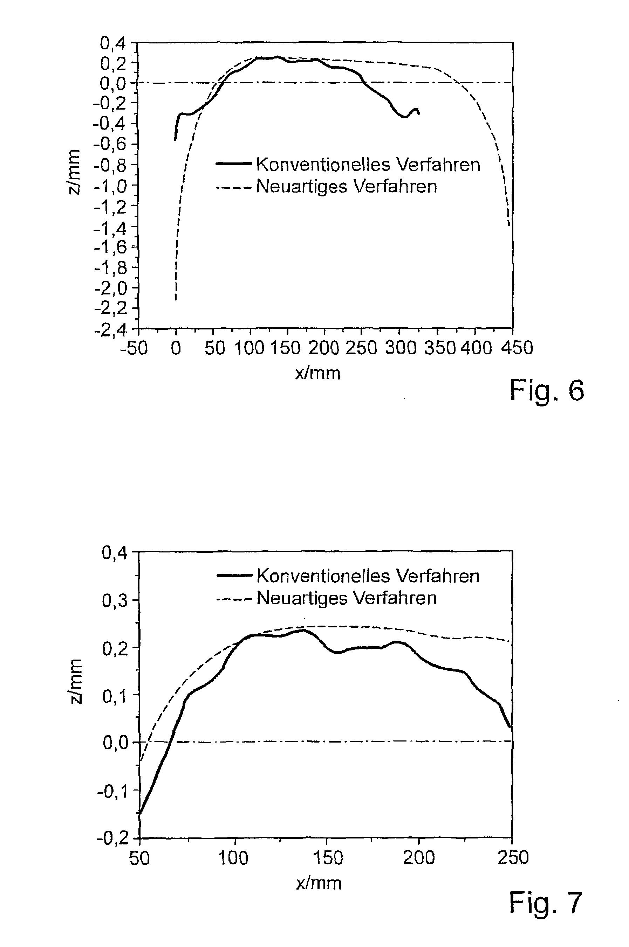

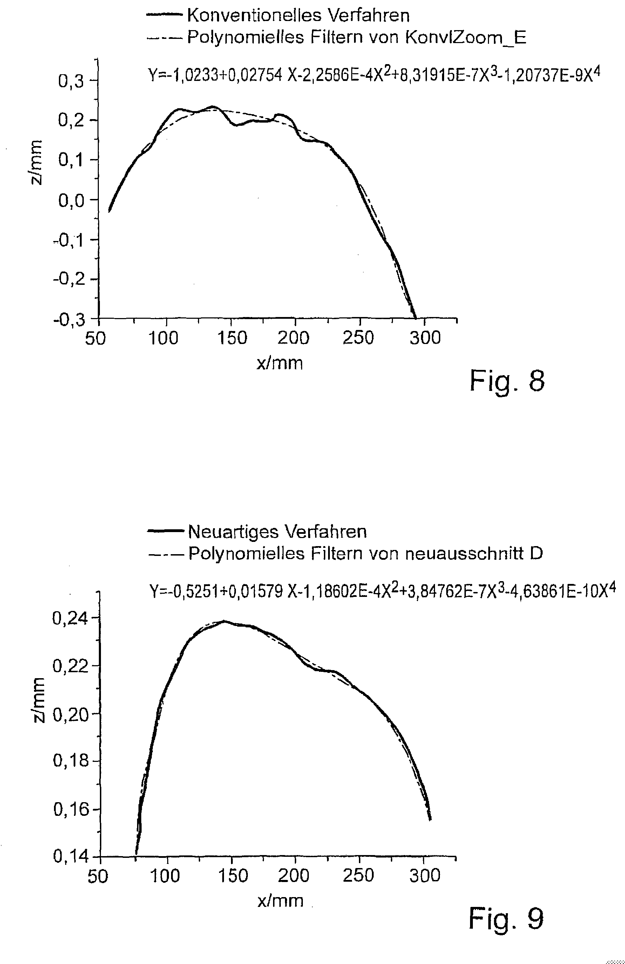

Fig. 6 zeigt die gemessene Kontur eines nach dem Stand der Technik gefertigten Glaskeramikbauteils 10, das die gleiche Bauform wie Fig. 1 aufweist (durchgezogene Linie) und im Vergleich dazu ein Oberflächenwelligkeitsprofil eines nach dem erfindungsgemäßen Verfahren erhaltenen Glaskeramikbauteils 10 (gestrichelte Linie). Der x-Wert ist längs der in Fig. 5 gezeigten x-Achse gemessen. Auf der y-Achse des Diagramms ist die Auslenkung des Tasters senkrecht zur x-Achse abgetragen (Z-Wert). Wie die Fig. 6 erkennen lässt, ergeben sich für die gemessenen Konturen makroskopisch betrachtet U-förmige Verläufe. Dies resultiert daraus, dass bei der Erzeugung der Abwinklung 14 die Ränder des Glaskeramikbauteils sich leicht aufwölben. Dieser makroskopische Effekt soll als Langwelligkeit bei der Betrachtung der Oberflächenwelligkeit unberücksichtigt bleiben und kann bei der Ermittlung des genormten Rauhigkeitswertes Ra mittels einer üblichen Polynomberechnung (Polynomielles Fitten) herausgerechnet (siehe Fig. 8 und 9).

Um die Feinwelligkeit deutlich herauszuarbeiten, muss von den Messdaten der langwellige Anteil abgezogen werden. Dies geschieht durch Anfetten der Messdaten mit einer einfachen und geeigneten Funktion (Fig. 8 strichpunktierte Linie für Stand der Technik und Fig. 9 für die nach dem erfindungsgemäßen Verfahren erhaltene Ausgestaltung). Auf die Fast-Fourier-Filterung (Tief- und Hochpassfilterung) wurde verzichtet, da sie aufgrund ihrer Komplexität mehr Fehlerquellen mit sich bringt, als sie zur Herausstellung der eigentlichen Aussage beitragen kann. Im Prinzip entspricht aber das Anfitten und Subtrahieren einer Langwelligkeit der Hochpassfilterung.

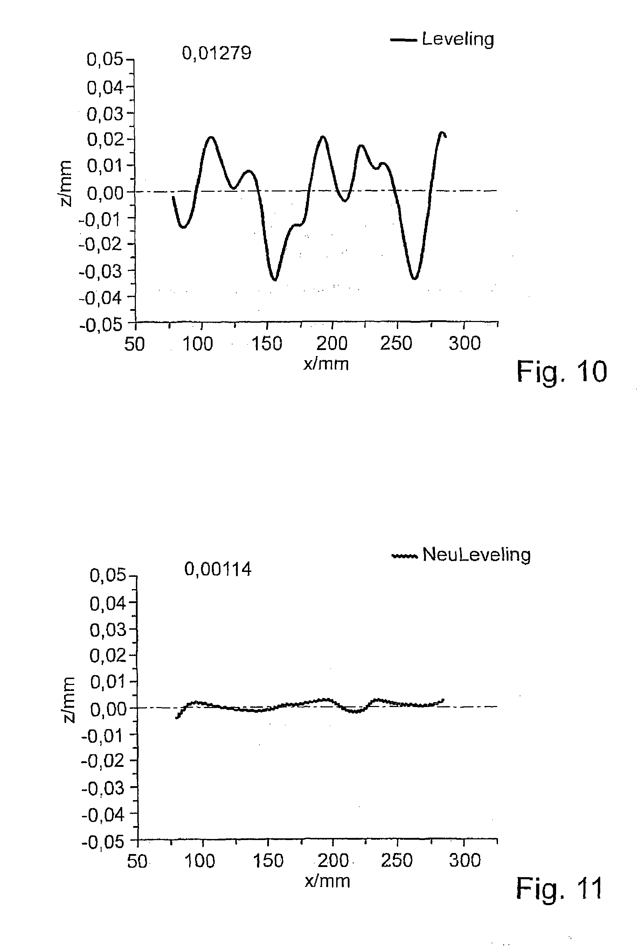

Werden die in den Fig. 8 und 9 gezeigten Kurven gegeneinander subtrahiert, erhält man die Diagramme gem. Fig. 10 und 11.

Berechnet man daraus den arithmetischen Mittenrauwert der Welligkeit (Arithmetischer Mittelwert der Beiträge aller Profilwerte, das heißt Aufsummierung der Beträge aller Abweichungen von der Nulllinie dividiert durch ihre Anzahl), so erkennt man, dass bei dem Glaskeramikbauteil gemäß dem Stand der Technik die Rauheit deutlich stärker ausgeprägt ist, als bei dem nach dem erfindungsgemäßen Verfahren erhaltenen Glaskeramikbauteil.

Insbesondere läßt sich mit dem erfindungsgemäßen Fertigungsverfahren ein Ra-Wert <10 µm erzeugen, wie dies die Darstellungen deutlich erkennen lassen. Damit ergibt sich eine deutlich verbesserte optische Bauteilqualität im Bereich der Abwinklung 14 mit kaum oder nicht wahrnehmbaren Oberflächenwelligkeiten.

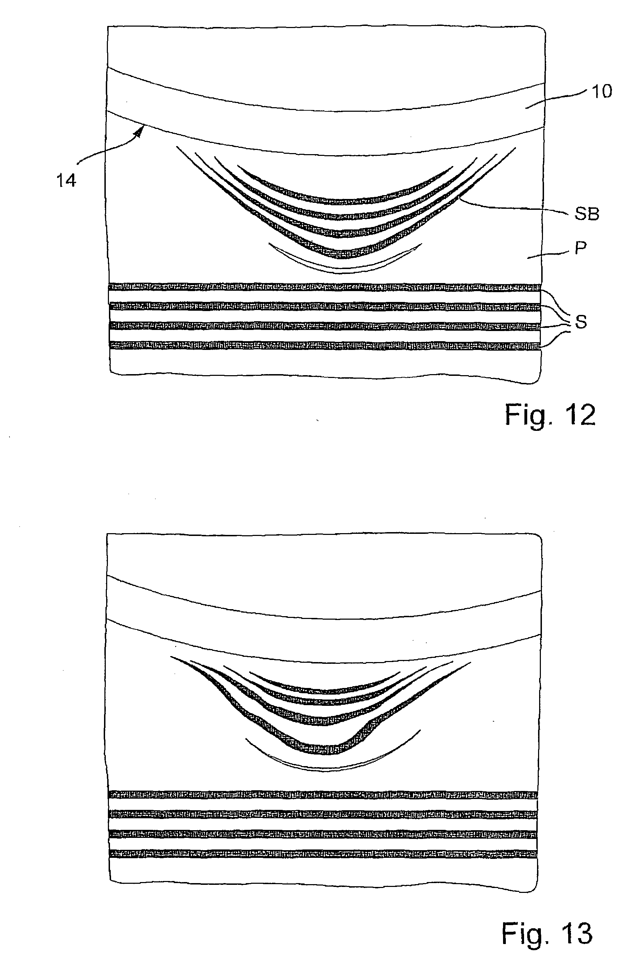

Zur Verdeutlichung des Qualitätsvorteils des nach dem erfindungsgemäßen Verfahren erhaltenen Glaskeramikbauteils 10 wird auf die Fig. 12 und 13 verwiesen. Fig. 12 zeigt ein nach dem erfindungsgemäßen Verfahren erhaltenes Glaskeramikbauteil gem. Fig. 1, das auf eine horizontale weiße Platte P aufgestellt ist. Dabei ist in Fig. 12 lediglich der Bereich der Abwinklung 14 gezeigt. Vor der Abwinklung 14 sind vier Striche S auf die Platte P aufgezeichnet. Betrachtet man nun die Platte P unter einem kleinen Winkel (beispielsweise 10° - 15°), dann ergibt sich vor der Abwinklung 14 das Spiegelbild SB der Striche S. Dieses Spiegelbild SB zeigt somit die verwerfungsfreie Kontur der Abwinklung 14.

Fig. 13 zeigt die gleiche Anordnung wie Fig. 12, jedoch mit einem Glaskeramikbauteil 10 gemäß dem Stand der Technik. Es ist deutlich erkennbar, dass das Spiegelbild SB der Striche S aufgrund der stark welligen Oberflächenstruktur deutliche Verwerfungen aufweist.

## Patentansprüche

1. Verfahren zur Erzeugung eines Glaskeramikbauteils (10) mit mindestens einer Abwinklung (14), wobei die Abwinklung (14) mit einem Biegeradius im Bereich zwischen 30 mm und 200 mm als Übergang zwischen zwei Schenkeln unter Einwirkung eines Umformungswerkzeuges gebildet wird und wobei während eines Keramisierungsprozesses eine Aufheizphase durchgeführt wird, während der die Glasplatte auf eine Keramisierungstemperatur erwärmt wird,
**dadurch gekennzeichnet,**
**dass** die Abwinklung (14) während des Keramisierungsprozesses bei der Umwandlung der im Grünglaszustand befindlichen Glasplatte in die Glaskeramikplatte (10) durchgeführt wird, wobei die Abwinklung (14) während der Aufheizphase vor der Erreichung der Keramisierungstemperatur dann eingeleitet wird, wenn die Glasplatte eine für die Verformung ausreichende Viskosität aufweist.

2. Verfahren nach Anspruch 1,
**dadurch gekennzeichnet,**
**dass** ein Biegewinkel (α) der Abwinklung (14) im Bereich zwischen 0° und 179°, vorzugsweise zwischen 60° und 150° erzeugt wird.

3. Verfahren nach einem der Ansprüche 1 und 2,
**dadurch gekennzeichnet,**
**dass** die an die Abwinklung (14) anschließenden Schenkel (11a, 11b) eine Schenkellänge (sL1 bis sL3) im Bereich zwischen 1 und 1000 mm, vorzugsweise zwischen 50 und 600 mm, aufweisen.

4. Verfahren nach einem der Ansprüche 1 bis 3,
**dadurch gekennzeichnet,**
**dass** in Richtung der Biegeachse eine Glasteilhöhe zwischen 10 und 1000 mm, vorzugsweise im Bereich zwischen 200 und 600 mm, erzeugt wird.

5. Verfahren nach einem der Ansprüche 1 bis 4,
**dadurch gekennzeichnet,**
**dass** die mittlere Dicke der Glasteile zwischen 1 bis 20 mm, vorzugsweise zwischen 2 - 8 mm liegt.

6. Verfahren nach einem der Ansprüche 1 bis 5,
**dadurch gekennzeichnet,**
**dass** die Glasplatte mit ihrer Außenseite (13) auf zwei Auflageplatten (20.1) aufgelegt wird,
**dass** auf die Innenseite (12) der Glasplatte zwei Niederhalter (30) aufgesetzt werden, die jeweils einer Auflageplatte (20.1) zugeordnet sind, und dass mittels einer Stellmechanik die beiden Auflageplatten (20.1) bei Erreichen einer für die Verformung der Glasplatte ausreichenden Viskosität gegeneinander verschwenkt werden.

## Claims

1. Process for producing a glass-ceramic component (10) having at least one bend (14), where the bend (14) is formed with a bending radius in the range from 30 mm to 200 mm as transition between two legs under the action of a forming tool and a heating phase during which the glass plate is heated to a ceramicization temperature is carried out during a ceramicization process, **characterized in that** the bend (14) is produced during the ceramicization process in the conversion of the glass plate present in the green glass state into the glass-ceramic plate (10), where formation of the bend (14) is commenced when the glass plate has a viscosity sufficient for forming during the heating phase before the ceramicization temperature has been reached.

2. Process according to Claim 1, **characterized in that** a bending angle (α) of the bend (14) in the range from 0° to 179°, preferably from 60° to 150°, is produced.

3. Process according to either Claim 1 or 2, **characterized in that** the legs (11a, 11b) adjoining the bend (14) have a leg length (sL1 to sL3) in the range from 1 to 1000 mm, preferably from 50 to 600 mm.

4. Process according to any of Claims 1 to 3, **characterized in that** a glass part height in the range from 10 to 1000 mm, preferably in the range from 200 to 600 mm, is produced in the direction of the bending axis.

5. Process according to any of Claims 1 to 4, **characterized in that** the average thickness of the glass parts is in the range from 1 to 20 mm, preferably 2-8 mm.

6. Process according to any of Claims 1 to 5, **characterized in that** the glass plate is laid with its outside (13) down on two support plates (20.1),
**in that** two holders (30) which are each assigned to a support plate (20.1) are placed on the inside (12) of the glass plate and
**in that** when a viscosity sufficient for forming of the glass plate has been reached the two support plates (20.1) are swivelled towards one another by means of an actuating mechanism.

## Revendications

1. Procédé de fabrication d'un composant en vitrocéramique (10) présentant au moins un coude (14), dans lequel on forme le coude (14) avec un rayon de courbure dans la plage comprise entre 30 mm et 200 mm en guise de transition entre deux branches avec l'intervention d'un outil de déformation et dans lequel, pendant un processus de céramisation, on exécute une phase de chauffage, pendant laquelle on chauffe la plaque de verre à une température de céramisation, **caractérisé en ce que** l'on réalise le coude (14) pendant le processus de céramisation lors de la conversion de la plaque de verre se trouvant dans son état de base en une plaque de vitrocéramique (10), dans lequel on façonne le coude (14) pendant la phase de chauffage avant d'atteindre la température de céramisation, lorsque la plaque de verre présente une viscosité suffisante pour la déformation.

2. Procédé selon la revendication 1, **caractérisé en ce que** l'on produit un angle de courbure (α) du coude (14) dans la plage comprise entre 0° et 179°, de préférence entre 60° et 150°.

3. Procédé selon l'une des revendications 1 et 2, **caractérisé en ce que** les branches (11a, 11b) se raccordant au coude (14) présentent une longueur de branche (sL1 à sL3) dans la plage comprise entre 1 et 1000 mm, de préférence entre 50 et 600 mm.

4. Procédé selon l'une quelconque des revendications 1 à 3, **caractérisé en ce que** l'on produit, dans la direction de l'axe de courbure, une hauteur de pièce de verre comprise entre 10 et 1000 mm, de préférence dans la plage entre 200 et 600 mm.

5. Procédé selon l'une quelconque des revendications 1 à 4, **caractérisé en ce que** l'épaisseur moyenne des pièces de verre se situe entre 1 et 20 mm, de préférence entre 2 et 8 mm.

6. Procédé selon l'une quelconque des revendications 1 à 5, **caractérisé en ce que**
on dépose la plaque de verre avec sa face extérieure (13) sur deux plaques d'appui (20.1),
on applique sur la face intérieure (12) de la plaque de verre deux serre-flan (30), qui sont associés respectivement à une plaque d'appui (20.1), et
on fait pivoter les deux plaques d'appui (20.1) l'une par rapport à l'autre, au moyen d'un mécanisme de réglage, lorsqu'une viscosité suffisante pour la déformation de la plaque de verre est atteinte.
